# EUROPÄISCHE PATENTSCHRIFT

(11) **EP 0 768 458 B1**
(45) Veröffentlichungstag und Bekanntmachung des Hinweises auf die Patenterteilung: **07.06.2000**
(21) Anmeldenummer: 96120559.8
(22) Anmeldetag: 28.03.1994
(51) Int. Cl.: F02F 3/10, F16J 1/02

(54) **Hubkolben eines Verbrennungsmotors mit einer zumindest teilweisen Laufflächenbewehrung**
Reciprocating piston of an internal combustion engine with an at least partially reinforced running surface
Piston alternatif d'un moteur à combustion interne dont la surface d'usure comporte un renforcement au moins partiel

(30) Priorität: 31.03.1993 DE 4310491
(43) Veröffentlichungstag der Anmeldung: 16.04.1997
(62) Teilanmeldung aus: 94911087.8
(73) Patentinhaber: Mahle GmbH, 70376 Stuttgart (DE)
(72) Erfinder: Ellermann, Jürgen, 71364 Winnenden (DE); Ziegler, Manfred, 71336 Waiblingen (DE)

(56) Entgegenhaltungen:
- EP-A- 0 380 415
- US-A- 3 869 393
- US-A- 5 014 605
- US-A- 5 239 955
- H.K.E.GEISSEN: "ENTWICKLUNGSLINIEN IN DER KRAFTFAHRTZEUGTECHNIK" , VERLAG TÜV RHEINLAND , KÖLN XP002026827 * Seite 649 - Seite 652 *

## Beschreibung

Die Erfindung betrifft einen Hubkolben eines Verbrennungsmotors mit einer zumindest teilweisen Laufflächenbewehrung.

Aluminiumkolben mit einer Laufflächenbewehrung sind an sich bekannt. Solche Bewehrungen werden in vielen Fällen galvanisch aufgebracht und bestehen beispielsweise aus Eisen-Nickel- oder Chromschichten. Das Aufbringen solcher Schichten ist technisch aufwendig und daher mit relativ hohen Kosten verbunden.

Eine andere Art Bewehrung besteht in kunstharzgebundenen Graphitschichten, die beispielsweise im Siebdruckverfahren aufgebracht werden können.

Insbesondere bei den zuletzt genannten kunstharzgebundenen Graphitschichten besteht der Wunsch, die Lebensdauer dieser Schichten zu erhöhen.

Ferner ist aus der EP-A 380415 eine aus faserverstärktem Kunstharz bestehende Laufflächenbewehrung bekannt, die am Kolben durch Kleben, Schrauben oder Nieten befestigt werden kann und die, wie anhand der Zeichnungen und der angegebenen Befestigungsmöglichkeiten geschlossen werden kann, eine Stärke von ca. 1,5 bis 3 mm aufweist. Trotz Faserbewehrung ist es zweifelhaft, ob die Kunstharzummmantelung eine ausreichende Verschleißfestigkeit über die gesamte Lebensdauer des Kolbens aufweist.

Von dem vorgenannten Stand der Technik ausgehend beschäftigt sich die Erfindung mit dem Problem, auf einem möglichst kostengünstigen Weg eine Laufflächenbewehrung für einen Kolben zu schaffen, die bei kostengünstiger Herstellbarkeit eine lange Lebensdauer aufweist.

Eine grundsätzliche Lösung für dieses Problem geben die kennzeichnenden Merkmale des Anspruchs 1 an.

Die auf diesen Anspruch rückbezogenen Unteransprüche stellen zweckmäßige Ausgestaltungen der Erfindung dar. Nähere Einzelheiten der Erfindung und die mit dieser erzielbaren Vorteile werden im Zusammenhang mit der Beschreibung anhand des in der Zeichnung dargestellten Ausführungsbeispiels noch näher dargelegt werden.

In der Zeichnung zeigen
- Fig. 1: Eine Ansicht eines Kolbens mit einem lokal folienbeschichteten Kolbenschaft,
- Fig. 2: einen Längsschnitt durch den Kolben-Schaftbereich mit einer Vergrößerung eines Bereiches hieraus,
- Fig. 3: eine Ansicht auf einen Ausschnitt aus einer mit verschiedenen Perforationen versehenen Metallfolie.

In sämtlichen Zeichnungsdarstellungen sind die gezeigten erfindungsgemäßen Bewehrungen, d.h. die Metallfolien in Ansicht oder Draufsicht jeweils punktiert dargestellt und sind deshalb nachfolgend nicht durch ein besonderes Bezugszeichen gekennzeichnet.

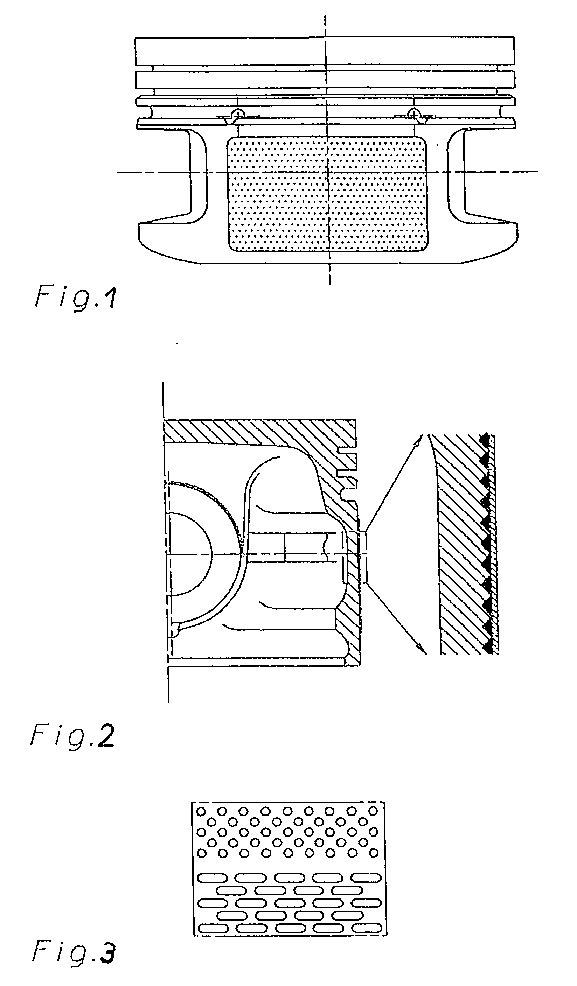

Bei dem Kolben nach Figur 1 besteht die Laufflächenbewehrung aus einer aufgeklebten, relativ dünnen Metallfolie mit einer Dicke zwischen etwa 20 und 40 Mymeter. Die Verklebung kann mit einem für wärmebeständige Verklebungen an sich bekannten Klebstoffsystem erfolgen.

Das Kolbengrundmaterial ist in allen Fällen der beschriebenen Ausführungsbeispiele jeweils Aluminium. Die aufzuklebende Metallfolie kann beispielsweise aus Nickel, Eisen, Chrom, Stählen oder Bronze bestehen, wobei die einzelnen Elemente allein oder miteinander kombiniert in Form von Legierungen vorliegen. Als Metallfolien sollen insbesondere Präzisionsfolien verwendet werden, bei denen die Dicke äußerst kleinen Toleranzen unterworfen ist.

Die Metallfolien sollen lediglich lokal auf dem Kolbenschaft aufgetragen werden und zwar auf den Tragflächen auf der Druck- und Gegendruckseite des Kolbenschaftes.

Die Metallfolien können, wie in Figur 3 dargestellt, verschiedenartig perforiert bzw. mit einer einseitigen Prägung versehen sein, um eine Tribologieverbesserung zu erreichen.

Eine Nachbearbeitung des Kolbenschaftes nach dem Aufkleben der Metallfolien soll nicht erfolgen. Zu diesem Zweck muß zum einen eine Präzisionsfolie mit einer genau definierten und eingehaltenen Dicke verwendet werden. Darüber hinaus darf die Klebeschicht keine Maßungenauigkeiten hervorrufen. Um kleberbedingte Maßabweichungen zu vermeiden, wird die Fläche auf dem Grundmaterial Aluminium, auf die die Metall-folie aufzukleben ist, zerklüftet ausgeführt und der Kleber so aufgetragen, daß er nur in den Tälern der Zerklüftung Kontakt mit der Metallfolie hat, während die Metallfolie im übrigen auf den äußeren Spitzen der Zerklüftung aufliegt. Die Zerklüftung wird in der Praxis zweckmäßigerweise durch ein Drehprofil gebildet, das auf einer Drehbank mit Hilfe eines entsprechend eingestellten Vorschubes mit dem Drehmeißel erzeugt wird. Drehprofile dieser Art werden durch Rauhigkeitswerte definiert. Im vorliegenden Fall sollte das Drehprofil durch Rauhigkeitswerte zwischen 5 und 50 Mymeter bestimmt sein. Wie eine Metallfolie erfindungsgemäß auf den Spitzen eines Drehprofiles aufliegen soll, zeigt die Figur 2. Die Drehriefentäler sind dort mit einem die Metallfolie kontaktierenden Kleber ausgefüllt. Der zu verwendende Klebstoff sollte zumindest bis 180 Grad Celcius warmbeständig sein.

Die erfindungsgemäße Kolbenausführung eignet sich besonders für einen Einsatz in Motoren, bei denen die Zylinderlauffläche und das Kolbengrundmaterial gleichermaßen Aluminium sind. Insbesondere in dem Fall, daß die aus Aluminium bestehende Zylinderlauffläche unbeschichtet ist, ist eine Bewehrung eines Aluminiumkolbens zwingend erforderlich. Die bisher aufgebrachten galvanischen Metallschichten sind zwar technisch funktionsfähig, aber mit hohem kostenträchtigen Herstellungsaufwand verbunden. Die erfindungsgemäße Alternative ist dagegen bei zumindest gleich guter Funktion erheblich kostengünstiger herstellbar.

## Patentansprüche

1. Hubkolben eines Verbrennungsmotors, insbesondere Hubkolben, aus einer Aluminiumlegierung als Grundmaterial, der insbsondere für einen Motor mit einer aus einer Aluminiumlegierung gebildeten Zylinderlauffläche bestimmt ist, mit einer zumindest teilweisen Laufflächenbewehrung,
**dadurch gekennzeichnet,**
daß die Laufflächenbewehrung eine dünne aufgeklebte Metall-Folie ist.

2. Hubkolben nach Anspruch 1,
**dadurch gekennzeichnet,**
daß die Metall-Folie aus Nickel, Eisen, Chrom, Bronze oder Stahl oder aus Legierungen der genannten Elemente besteht.

3. Hubkolben nach Anspruch 2,
**dadurch gekennzeichnet,**
daß die Folie eine Dicke zwischen 15 und 80 Mymeter, insbesondere zwischen 20 und 40 Mymeter, besitzt.

4. Hubkolben nach einem der Ansprüche 1 bis 3,
**dadurch gekennzeichnet,**
daß die Verklebung mit einem wärmebeständigen Klebstoffsystem erfolgt.

5. Hubkolben nach einem der Ansprüche 1 bis 4,
**dadurch gekennzeichnet,**
daß die von dem Grundmaterial des Kolbens gebildeten Folienauflageflächen eine zerklüftete Oberfläche besitzen, und daß die Folie auf den Spitzen der zerklüfteten Oberflächen aufliegt, während der Klebstoff sich in den Tälern dieser Oberflächen befindet.

6. Kolben nach einem der Ansprüche 1 bis 5,
**dadurch gekennzeichnet,**
daß die zerklüftete Oberfläche ein auf einer Drehbank von einem Drehmeißel erzeugtes Drehprofil ist.

7. Hubkolben nach einem der Ansprüche 1 bis 6,
**dadurch gekennzeichnet,**
daß das Drehprofil durch eine Rauhigkeit von 5 bis 50 Mymeter definiert ist.

8. Hubkolben nach einem der Ansprüche 1 bis 7,
**dadurch gekennzeichnet,**
daß die Folie Durchbrüche besitzt.

9. Hubkolben nach einem der Ansprüche 1 bis 8,
**dadurch gekennzeichnet,**
daß die Durchbrüche eine Perforation sind.

10. Hubkolben nach einem der Ansprüche 1 bis 9
**dadurch gekennzeichnet,**
daß die Folie einseitige Vertiefungen besitzt, die durch Prägung erzeugt werden.

11. Hubkolben nach einem der vorhergehenden Ansprüche,
**dadurch gekennzeichnet**,
daß die Bewehrung nachbearbeitungsfrei aufgetragen ist.

## Claims

1. Reciprocating piston of an internal combustion engine, in particular a reciprocating piston made from an aluminium alloy as the base material, which is designed in particular for an engine with a cylindrical running surface made from an aluminium alloy, with an at least partially reinforced running surface, characterised in that the running surface reinforcement is a thin adhered metal foil.

2. Reciprocating piston according to claim 1, characterised in that the metal foil is made of nickel, iron, chromium, bronze or steel or of alloys of the said elements.

3. Reciprocating piston according to claim 2, characterised in that the foil has a thickness of between 15 and 80 µm, in particular between 20 and 40 µm.

4. Reciprocating piston according to one of claims 1 to 3, characterised in that the adhesion is performed using a heat-resistant adhesive.

5. Reciprocating piston according to one of claims 1 to 4, characterised in that the foil mounting surfaces formed by the base material of the piston have an indented surface, and in that the foil lies on the peaks of the indentations whilst the adhesive is found in the troughs of said indentations.

6. Reciprocating piston according to one of claims 1 to 5, characterised in that the indented surface is a rotary section produced on a turning machine by a turning tool.

7. Reciprocating piston according to one of claims 1 to 6, characterised in that the rotary section is defined by a roughness of 5 to 50 µm.

8. Reciprocating piston according to one of claims 1 to 7, characterised in that the foil comprises holes.

9. Reciprocating piston according to one of claims 1 to 8, characterised in that the holes are perforations.

10. Reciprocating piston according to one of claims 1 to 9, characterised in that the foil comprises one-sided depressions which are produced by stamping.

11. Reciprocating piston according to one of the preceding claims, characterised in that the reinforcement is applied without subsequent processing.

## Revendications

1. Piston de moteur à combustion interne, en particulier piston en alliage d'aluminium comme matière de base, qui est destiné en particulier à un moteur dont les cylindres ont une surface de glissement en alliage d'aluminium et a une surface de glissement au moins en partie armée, caractérisé par le fait que l'armure de la surface de glissement est une feuille métallique mince collée.

2. Piston selon la revendication 1, caractérisé par le fait que la feuille métallique est constitué de nickel, de fer, de chrome, de bronze ou d'acier ou d'alliages de ces éléments.

3. Piston selon la revendication 2, caractérisé par le fait que la feuille a une épaisseur comprise entre 15 et 80 microns, en particulier entre 20 et 40 microns.

4. Piston selon l'une des revendications 1 à 3, caractérisé par le fait que le collage est effectué avec un système de colle résistant à la chaleur.

5. Piston selon l'une des revendications 1 à 4, caractérisé par le fait que les surfaces d'appui de la feuille formées par la matière de base du piston ont une surface crevassée, et que la feuille repose sur les sommets des surfaces crevassées, tandis que la colle se trouve dans les vallées de ces surfaces.

6. Piston selon l'une des revendications 1 à 5, caractérisé par le fait que la surface crevassée est un profil de tournage produit sur un tour par un outil de tournage.

7. Piston selon l'une des revendications 1 à 6, caractérisé par le fait que le profil de tournage est défini par une rugosité de 5 à 50 microns.

8. Piston selon l'une des revendications 1 à 7, caractérisé par le fait que la feuille présente des trous.

9. Piston selon l'une des revendications 1 à 8, caractérisé par le fait que les trous sont une perforation.

10. Piston selon l'une des revendications 1 à 9, caractérisé par le fait que la feuille a sur une face des creux qui sont produits par estampage.

11. Piston selon l'une des revendications précédentes, caractérisé par le fait que l'armure est appliquée sans reprise.
